# FASCICULE DE BREVET EUROPEEN

(11) **EP 0 708 590 B1**
(45) Date de publication et mention de la délivrance du brevet: **29.01.1997**
(21) Numéro de dépôt: 94923767.1
(22) Date de dépôt: 01.08.1994
(51) Int. Cl.: A01G 3/025

(54) **ELAGUEUR A LEVIER DEPORTE**
ASTSCHERE MIT DEZENTRIERTEM HEBEL
PRUNING TOOL WITH OFFSET LEVER

(30) Priorité: 03.08.1993 FR 9309688
(43) Date de publication de la demande: 01.05.1996
(73) Titulaire: Michelland, Charles, F-73220 Saint Pierre de Belleville (FR); Michelland neé Ruggeri, Régine, F-73220 Saint Pierre de Belleville (FR); Michelland, Jacqueline, F-73000 Chambery (FR)
(72) Inventeur: Michelland, Charles, F-73220 Saint Pierre de Belleville (FR); Michelland neé Ruggeri, Régine, F-73220 Saint Pierre de Belleville (FR); Michelland, Jacqueline, F-73000 Chambery (FR)
(74) Mandataire: Poncet, Jean-François
(86) Numéro de dépôt international: FR9400967
(87) Numéro de publication internationale: WO9503689

(56) Documents cités:
- EP-A- 0 278 838
- EP-A- 0 405 665
- EP-A- 0 496 683
- DE-A- 3 330 093
- US-A- 4 224 739

## Description

La présente invention concerne les dispositifs permettant de couper les branches d'un arbre le long du tronc.

Ces dispositifs, qui sont des outils manoeuvrés à la main, sont généralement appelés élagueur ou échenilloir.

On connaît par exemple de tels élagueurs, décrits dans les documents EP-A-0 496 683, EP-A-0 405 665, DE-A-3 330 093 ou US-A-4 224 739, comprenant un corps d'outil à profil en crochet, conformé pour être assujetti selon une partie de raccordement à l'extrémité d'un manche se développant selon une direction longitudinale de manche. Le contour intérieur du crochet forme une arête d'appui concave à rayon de courbure orienté vers la direction de développement du manche. Une partie mobile d'outil, articulée sur le corps d'outil selon un axe de rotation, se raccorde dans la zone occupée par l'axe de rotation à un levier d'actionnement se développant latéralement à l'opposé du crochet. Cette partie mobile d'outil est munie d'une arête tranchante à profil en arc convexe. Lors de la rotation de la partie mobile d'outil, l'arête tranchante balaye progressivement l'ouverture du crochet. Un tirant permet l'actionnement du levier pour produire la rotation de partie mobile d'outil, et la coupe d'une branche insérée dans l'ouverture du corps d'outil à profil en crochet.

Un tel outil permet de couper à distance des branches d'arbre le long du tronc.

Il apparaît toutefois qu'un tel outil n'est pas adapté pour l'élagage d'un arbre dont les branches sont relativement serrées, et notamment dont les branches sont réparties selon des successions de branches latéralement proches les unes des autres. Le levier d'actionnement de partie mobile d'outil vient en effet buter contre les branches voisines de la branche à couper, et interdit soit la manoeuvre du levier pour la coupe, soit l'engagement du corps d'outil en crochet sur la branche à couper. En outre, il est apparu relativement difficile de couper des branches en biais à l'aide d'un tel outil connu. De plus, la coupe d'une branche nécessite une manoeuvre complète de rotation du levier, quelque soit le diamètre de la branche. Ainsi, lors de l'élagage d'une branche de petit diamètre, il est nécessaire de manoeuvrer le levier selon une amplitude aussi grande que pour la coupe d'une branche de plus gros diamètre. Il en résulte une perte de temps non négligeable.

Le problème proposé par la présente invention est de diminuer l'encombrement spécifique du levier de partie mobile d'outil, tout en conservant un pouvoir de coupe acceptable, de façon que la manoeuvre de l'outil ne soit pas gênée par la présence des branches latéralement voisines de la branche à couper sur l'arbre, et de façon que le levier ne gêne pas le déplacement et le positionnement de la partie mobile d'outil sur la branche à couper.

Un autre objet de l'invention est de prévoir une forme d'outil capable de couper des branches en biais, c'est-à-dire d'effectuer des coupes selon une section ovale.

Un autre objet de l'invention est de faciliter la coupe des branches de petit diamètre, de façon que cette coupe puisse s'effectuer selon une manoeuvre de levier d'amplitude réduite.

Pour atteindre ces objets ainsi que d'autres, un élagueur selon l'invention comprend :
- un corps d'outil à profil en crochet, conformé pour être assujetti selon une partie de raccordement à l'extrémité d'un manche se développant selon une direction longitudinale de manche, le contour intérieur du crochet formant une arête d'appui concave à centre de courbure orienté vers la direction de développement du manche,
- une partie mobile d'outil, articulée sur le corps d'outil selon un axe de rotation, solidaire d'un levier d'actionnement se développant latéralement à l'opposé du crochet et munie d'une arête tranchante à profil en arc convexe telle que, lors de la rotation de la partie mobile d'outil, l'arête tranchante balaye progressivement l'ouverture de la partie en crochet en glissant ;
- des moyens permettent l'actionnement du levier pour produire la rotation de partie mobile d'outil ;
- l'axe de rotation de partie mobile d'outil est positionné sur la partie de raccordement de corps d'outil se raccordant au manche ;
- la partie mobile d'outil et le levier forment un ensemble présentant un profil général en crosse, articulée selon son extrémité courbe sur le corps d'outil, et recourbée à l'inverse de la courbure du profil de la partie en crochet de corps d'outil ;
- le levier se raccorde sur la partie mobile d'outil de façon à être déporté en direction du manche par rapport à l'axe de rotation ;
ainsi, dans toutes ses positions successives lors de la rotation de partie mobile d'outil, le levier laisse un dégagement supérieur autorisant le passage des branches latéralement voisines de la branche à couper, laissant la liberté de pivotement du levier au-dessous des branches latéralement voisines pour l'entraînement de la partie mobile d'outil.

Le fait que le levier reste à l'écart et au-dessous des branches latéralement voisines de la branche à couper permet d'envisager l'usage d'un levier de plus grande longueur, assurant une augmentation du pouvoir de coupe de l'élagueur.

De préférence, l'arête concave d'appui comprend une première portion peu ou pas incurvée, sensiblement dans le prolongement du manche, se raccordant angulairement à une seconde partie incurvée pour former un fond d'arête d'appui anguleux susceptible de recevoir et de coincer les branches de plus petit diamètre.

D'autres objets, caractéristiques et avantages de la présente invention ressortiront de la description suivante de modes de réalisation particuliers, faite en relation avec les figures jointes, parmi lesquelles:
- la figure 1 est une vue de côté d'un élagueur selon un premier mode de réalisation de l'invention en position ouverte ;
- la figure 2 est une vue de côté d'un élagueur selon un second mode de réalisation de l'invention en position fermée en fin de coupe ;
- la figure 3 est une coupe montrant une structure d'axe de rotation entre partie mobile d'outil et corps d'outil, selon l'invention ; et
- la figure 4 est une vue de côté d'une partie mobile d'outil selon un troisième mode de réalisation de l'invention.

Dans les modes de réalisation représentés sur les figures, l'élagueur selon l'invention comprend un corps d'outil 1 conformé pour être assujetti, selon une partie de raccordement 2, à l'extrémité 3 d'un manche 4 se développant selon une direction longitudinale I-I de manche. Le corps d'outil 1 se prolonge, au-delà de sa partie de raccordement 2, par une portion recourbée en crochet 5, comme le représentent les figures. Le corps d'outil 1 présente ainsi une forme générale à profil en crochet, le crochet se développant dans un plan. Le contour intérieur du corps d'outil en crochet forme une arête d'appui 6 concave à centre de courbure généralement orienté vers la direction de développement du manche 4.

Une partie mobile d'outil 7 est articulée sur le corps d'outil 1 selon un axe de rotation 8. Cette partie mobile d'outil 7 est solidaire d'un levier d'actionnement 9 qui se développe latéralement à l'opposé de la partie en crochet 5 du corps d'outil 1. Le levier est sollicité par des moyens d'actionnement tels qu'un tirant 10 dont une extrémité est assujettie à l'extrémité libre du levier 9 et dont l'autre extrémité est accessible par l'utilisateur tenant l'extrémité libre du manche 4.

La partie mobile d'outil 7 est munie d'une arête tranchante 11 à profil en arc convexe, telle que, lors de la rotation de la partie mobile d'outil 7 autour de l'axe 8, l'arête tranchante 11 balaye progressivement l'ouverture 12 de la partie en crochet, tout en glissant progressivement depuis le fond 14 de l'ouverture 12 de la partie en crochet 5 jusqu'à l'extrémité 40 du bec. Dans ce mouvement, l'arête tranchante 11 glisse progressivement sur une branche 13 insérée dans l'ouverture 12 de la partie en crochet 5, pour la trancher.

Selon l'invention, l'axe de rotation 8 est positionné sur la partie de raccordement 2 de corps d'outil se raccordant au manche 4. Dans les modes de réalisation préférés, l'axe de rotation 8, sur la partie de raccordement 2 de corps d'outil, est positionné sensiblement à hauteur du fond 14 d'arête d'appui 6 concave de corps d'outil ou légèrement au-dessus dudit fond 14 d'arête d'appui 6.

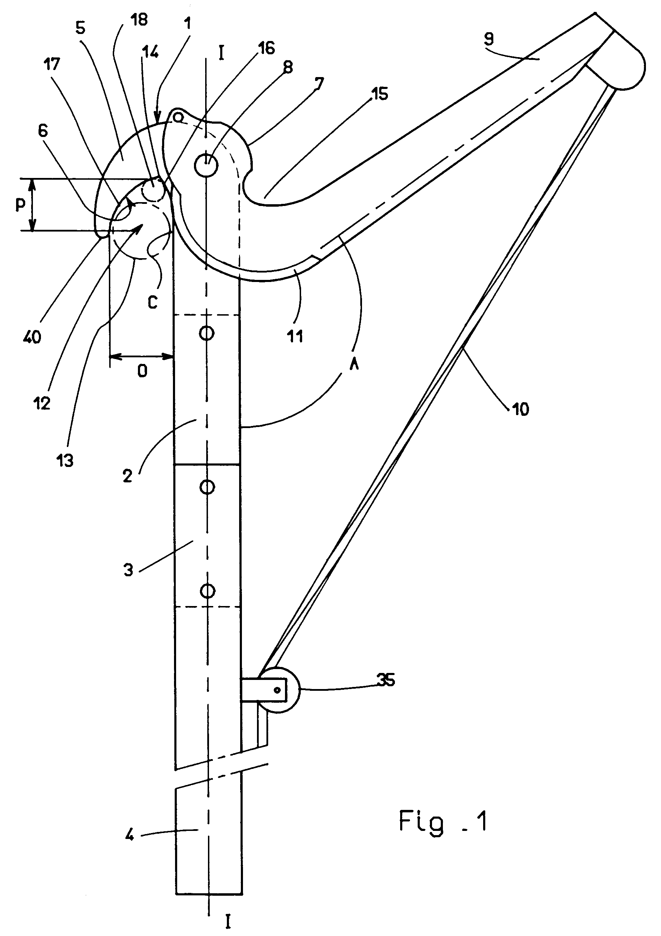

Le levier 9 se raccorde à la partie mobile d'outil 7 de façon à être déporté en direction du manche 4 par rapport à l'axe de rotation 8, comme le représente notamment la figure 1. De cette façon, l'ensemble constitué par la partie mobile d'outil 7 et le levier 9 laisse libre un dégagement 15 supérieur qui permet le passage d'une branche latéralement voisine de la branche 13 à couper, laissant la liberté de pivotement du levier 9 au dessous des branches latéralement voisines pour l'entraînement de la partie mobile d'outil 7.

Dans les modes de réalisation représentés sur les figures, la partie mobile d'outil 7 et le levier 9 forment une pièce monobloc présentant un profil général en crosse, pièce articulée selon son extrémité courbe sur le corps d'outil 1 et recourbée à l'inverse de la courbure du profil en crochet de corps d'outil 1, comme illustré sur les figures.

Selon un mode de réalisation avantageux, l'arête concave d'appui 6 comprend une première portion 16 d'arête, peu ou pas incurvée, sensiblement dans le prolongement du manche 4. Cette première portion 6 d'arête se raccorde angulairement, selon le fond 14, à une seconde portion 17 d'arête, incurvée et tournée vers la partie de raccordement 2 du corps d'outil 1. L'ensemble forme ainsi un fond d'arête d'appui 14 anguleux, susceptible de recevoir et de coincer les branches de plus petit diamètre, telles que la branche 18 représentée en traits mixtes. Il en résulte que, pour la coupe d'une telle branche 18 de plus petit diamètre, la branche 18 reste coincée dans le fond 14 de la partie en crochet, et peut être coupée avec un pivotement d'amplitude réduite du levier 9. Au contraire, dans les structures connues d'élagueur, une branche de petit diamètre se déplace dans la portion arrondie en crochet, et il est nécessaire de manoeuvrer le levier selon une amplitude complète avant de couper la branche, quel que soit son diamètre.

De préférence, la partie en crochet 5 de corps d'outil 1 est relativement profonde. Par exemple, on prévoit avantageusement une ouverture 12 de crochet dont l'espace intérieur présente une profondeur P sensiblement égale à son écartement O. Pour cela, la seconde portion 17 d'arête d'appui présente un profil sensiblement en quart de cercle dont le centre C est sensiblement sur le bord opposé de manche en regard de l'extrémité 40 de partie en crochet 5.

Dans le mode de réalisation de la figure 1, l'arête tranchante 11 présente un profil sensiblement en arc de cercle.

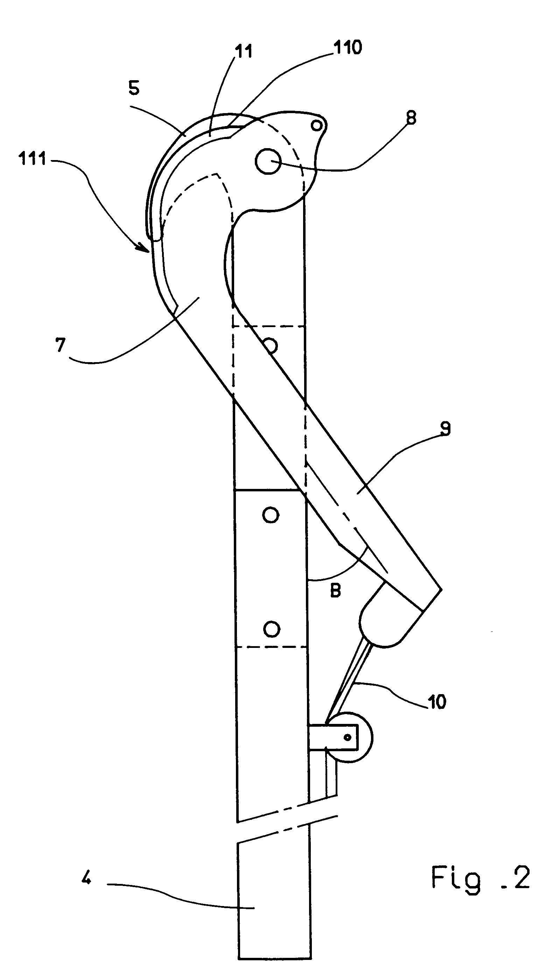

Dans le mode de réalisation représenté sur la figure 2, l'arête tranchante 11 comprend une première partie 110 à rayon de courbure plus faible, par exemple voisin du rayon de courbure de la seconde portion 17 d'arête d'appui, et une seconde partie 111 à plus grand rayon de courbure.

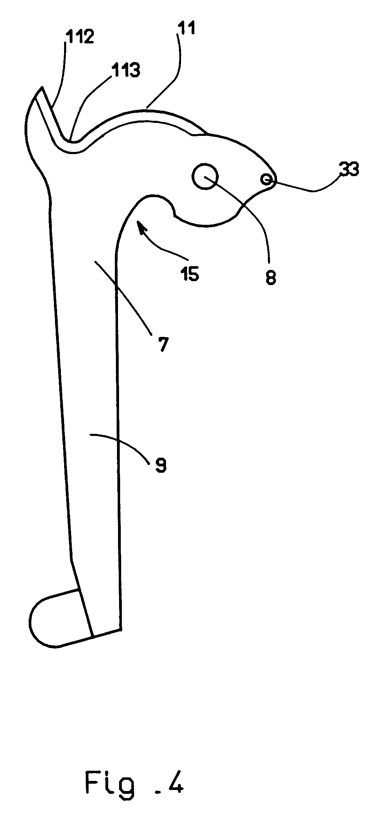

Selon une variante représentée sur la figure 4, l'arête coupante 11 comprend en outre un bec proéminent 112 tendant à repousser la branche dans le fond de l'ouverture 12 de la partie en crochet 5. Le bec 112 est positionné de façon que sa base 113 vient en regard de l'extrémité 40 de partie en crochet 5 en fin de coupe. Cette disposition est utile notamment pour la coupe franche de branches lourdes dont la section emplit presque entièrement l'ouverture de la partie en crochet 5. En effet, le bec 112 se trouve au-dessous de la branche à couper et, en fin de coupe, il sectionne rapidement de son tranchant toute amorce de déchirure qui pourrait résulter de l'entraînement de la branche qui tombe.

La figure 1 représente un élagueur selon l'invention en position ouverte, permettant l'introduction des branches 13 ou 18 dans l'ouverture 12 de la partie en crochet 5. La figure 2 représente un élagueur en position fermée, en fin de coupe. Comme on le voit, la partie mobile d'outil 7 est conformée de façon que :
- en début de pénétration de l'arête tranchante dans l'ouverture 12 de la partie en crochet 5, le levier 9 est incliné selon un angle A inférieur à 135° environ par rapport au sens de développement du manche 4, et l'arête tranchante 11 affleure la partie intérieure de la partie en crochet en zone intermédiaire le long de la profondeur P du crochet ;
- en fin de pénétration de l'arête tranchante 11 dans l'ouverture 12 de la partie en crochet 5, le levier 9 est incliné selon un angle B inférieur à environ 45° par rapport au sens de développement du manche, comme le représente la figure 2.

La partie mobile d'outil 7 est sollicitée par un ressort 19 la rappelant en position ouverte de la figure 1.

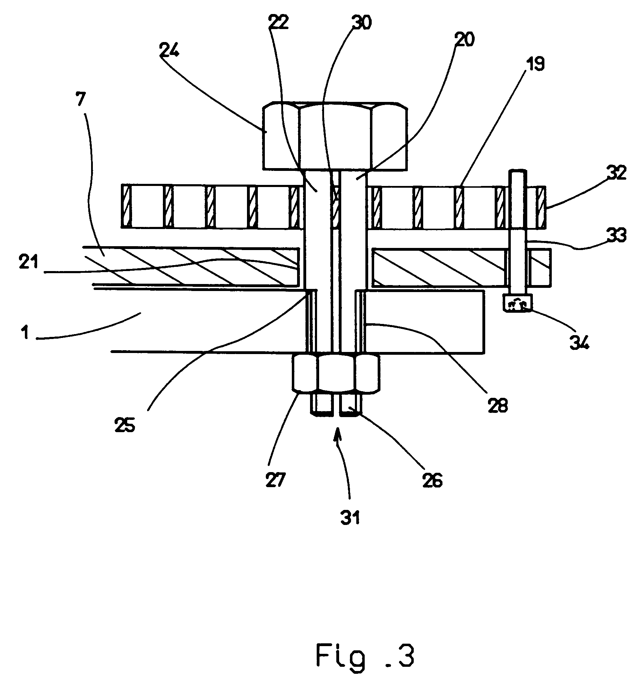

Dans le mode de réalisation représenté sur la figure 3, le ressort 19 est un ressort à lame enroulée en spirale autour d'un moyeu 20 solidaire du corps d'outil 1 et traversant une lumière 21 de la partie mobile d'outil 7. L'extrémité intérieure 30 du ressort 19 est solidarisée au moyeu 20 par passage dans une fente 31 longitudinale dudit moyeu 20. L'extrémité extérieure 32 du ressort 19 est accrochée à la partie mobile d'outil 7 par une vis 33. Le moyeu 20 comprend une tige principale 22 traversant la lumière 21 de la partie mobile d'outil 7, dont une extrémité porte une tête 24 et dont l'autre extrémité à épaulement 25 se prolonge par une tige coaxiale 26 filetée qui reçoit un écrou 27. La tige coaxiale 26 traverse un trou 28 du corps 1. L'écrou 27 vient porter contre le corps 1. La tige principale 22 du moyeu 20 s'engage à faible jeu dans la lumière 21 de la partie mobile d'outil 7, et l'épaulement 25 vient en appui contre le corps d'outil 1 à l'opposé de l'écrou 27.

La vis 33 comporte une tête 34 en appui contre la face de partie mobile d'outil 7 qui glisse contre le corps d'outil 1. Selon cette disposition, la tête 34 de vis vient en appui contre la tranche du corps d'outil 1 pour former butée de fin de course en position de pénétration minimale de partie mobile d'outil 7.

L'outil selon l'invention présente une grande facilité d'accrochage sur une branche à couper, grâce à la forme particulière de la partie en crochet 5, ouverte et courte. On peut positionner l'outil dans tous les cas de répartition des branches sur le tronc de l'arbre.

Grâce à la forme particulière de l'arête d'appui 6, à fond 14 anguleux, l'outil permet de couper les menues branches en limitant la longueur de tirant 10 à tirer selon la grosseur de celle-ci.

Grâce à la forme particulière de l'arête tranchante 11 et au positionnement de l'axe de rotation 8, la coupe se fait sur le côté de la branche 13, ce qui évite le coincement de la lame et facilite la coupe.

Cette position de l'arête tranchante 11 a aussi l'avantage de couper les branches qui poussent en forte inclinaison, formant par exemple des fourches, en coupant un maximum de biais.

Cette forme particulière de partie mobile d'outil 7 permet en outre de limiter sa dimension en utilisant une plus grande partie de sa circonférence pour former l'arête tranchante 11. La pénétration de l'arête tranchante 11 se fait avec moins d'effort, du fait d'un glissement prolongé sur la branche à couper.

La forme générale de partie mobile d'outil 7 et de levier 9, en crosse inversée, permet le passage des branches latéralement proches de la branche à couper 13, sans gêner le mouvement du levier 9.

De préférence, le tirant 10 passe sur une roue de guidage 35 tenue au voisinage du manche 4 près de son extrémité 3. On peut également prévoir une structure de moufle entre la roue de guidage 35 et l'extrémité du levier 9.

La présente invention n'est pas limitée aux modes de réalisation qui ont été explicitement décrits, mais elle en inclut les diverses variantes et généralisations contenues dans le domaine des revendications ci-après.

## Revendications

1. Elagueur pour couper une branche d'arbre, comprenant :
- un corps d'outil (1) à profil en crochet (5), conformé pour être assujetti selon une partie de raccordement (2) à l'extrémité (3) d'un manche (4) se développant selon une direction longitudinale (I-I) de manche, le contour intérieur du crochet (5) formant une arête d'appui (6) concave à centre de courbure orienté vers la direction de développement du manche (4),
- une partie mobile d'outil (7), articulée sur le corps d'outil (1) selon un axe de rotation (8), solidaire d'un levier d'actionnement (9) se développant latéralement à l'opposé du crochet (5), et munie d'une arête tranchante (11) à profil en arc convexe telle que, lors de la rotation de la partie mobile d'outil (7), l'arête tranchante (11) balaye progressivement l'ouverture (12) de la partie en crochet (5) en glissant,
- des moyens (10) permettant l'actionnement du levier (9) pour produire la rotation de partie mobile d'outil (7),
- l'axe de rotation (8) de partie mobile d'outil (7) étant positionné sur la partie de raccordement (2) de corps d'outil se raccordant au manche (4),
caractérisé en ce que :
- la partie mobile d'outil (7) et le levier (9) forment un ensemble présentant un profil général en crosse, articulée selon son extrémité courbe sur le corps d'outil (1), et recourbée à l'inverse de la courbure du profil de la partie en crochet (5) de corps d'outil (1),
- le levier (9) se raccorde sur la partie mobile d'outil (7) de façon à être déporté en direction du manche (4) par rapport à l'axe de rotation (8),
de sorte que, dans toutes ses positions successives lors de la rotation de partie mobile d'outil (7), le levier (9) laisse un dégagement supérieur (15) autorisant le passage des branches latéralement voisines de la branche à couper (13), laissant la liberté de pivotement du levier (9) au-dessous des branches latéralement voisines pour l'entraînement de la partie mobile d'outil (7).

2. Elagueur selon la revendication 1, caractérisé en ce que l'axe de rotation (8), sur la partie de raccordement (2) de corps d'outil se raccordant au manche (4), est positionné sensiblement à hauteur du fond (14) d'arête d'appui (6) concave de corps d'outil, ou légèrement au-dessus dudit fond (14) d'arête d'appui (6).

3. Elagueur selon l'une des revendications 1 ou 2, caractérisé en ce que l'arête d'appui (6) concave comprend une première portion (16) d'arête d'appui peu ou pas incurvée, sensiblement dans le prolongement du manche (4), se raccordant angulairement a une seconde portion (17) d'arête d'appui incurvée pour former un fond d'arête d'appui (14) anguleux susceptible de recevoir et de coincer les branches (18) de plus petit diamètre.

4. Elagueur selon la revendication 3, caractérisé en ce que l'espace intérieur de l'ouverture (12) de partie en crochet (5) présente une profondeur (P) sensiblement égale a son écartement (O).

5. Elagueur selon la revendication 4, caractérisé en ce que la seconde portion (17) d'arête d'appui présente un profil en quart de cercle dont le centre (C) est sensiblement sur le bord opposé de manche en regard de l'extrémité (40) de partie en crochet (5).

6. Elagueur selon l'une des revendications 4 ou 5, caractérisé en ce que la partie mobile d'outil (7) est conformée de façon que :
- en début de pénétration de l'arête tranchante (11) dans l'ouverture (12) de la partie en crochet (5), le levier (9) est incliné selon un angle A de moins de 135° par rapport au sens de développement du manche (4), et l'arête tranchante (11) affleure la partie intérieure du crochet en zone intermédiaire le long de la profondeur (P) du crochet,
- en fin de pénétration de l'arête tranchante (11) dans l'ouverture (12) de la partie en crochet (5), le levier (9) est incliné selon un angle B de moins de 45° vers le sens de développement du manche (4).

7. Elagueur selon l'une quelconque des revendications 1 à 6, caractérisé en ce que la partie mobile d'outil (7) est sollicitée par un ressort (19) la rappelant en position ouverte.

8. Elagueur selon la revendication 7, caractérisé en ce que le ressort (19) est un ressort à lame enroulée en spirale autour d'un moyeu (20) solidaire du corps d'outil (1) et traversant une lumière (21) de la partie mobile d'outil (7), l'extrémité intérieure (30) du ressort (19) étant engagée dans une fente (31) du moyeu (20), l'extrémité extérieure (32) du ressort (19) étant accrochée a la partie mobile d'outil (7).

## Claims

1. Pruning tool to cut a tree branch, comprising:
- a hook-shaped (5) tool body (1), having a connecting portion (2) adapted to be joined to the end (3) of a shaft (4) extending in a longitudinal shaft direction (I-I), the interior contour of the hook (5) forming a concave bearing edge (6) having a centre of curvature oriented towards the developing direction of the shaft (4),
- a movable tool portion (7), pivotally connected to the tool body (1) via a pivot pin (8), joined to an actuator lever (9) extending laterally away from the hook (5), and having a convex arcuate profile cutting edge (11) such that, when the movable tool portion (7) is rotated, the cutting edge (11) slides progressively across the opening (12) of the hook portion (5),
- means (10) for actuating the lever (9) to rotate the movable tool portion (7),
- the pivot pin (8) of the movable tool portion (7) being located on the connecting portion (2) of the tool body adapted to be joined to the shaft (4),
characterised in that:
- the movable tool portion (7) and the lever (9) form a combination having a generally crook-shaped profile, pivoted to the tool body (1) at its curved end, and curved in the opposite direction to the curvature of the profile of the hook portion (5) of the tool body (1),
- the lever (9) is joined to the movable tool portion (7) in such a manner that it is offset towards the shaft (4) relative to the pivot pin (8),
whereby, in all its successive positions upon rotation of the movable tool portion (7), the lever (9) defines an upper clearance (15) for branches laterally adjacent the branch (13) being pruned, allowing the lever (9) to pivot freely under laterally adjacent branches to actuate the movable tool portion (7).

2. Pruning tool according to claim 1, characterised in that the pivot pin (8), on the connecting portion (2) of the tool body joined to the shaft (4), is located at substantially the same height as the far end (14) of the concave bearing edge (6) of the tool body, or slightly higher than said far end (14) of the bearing edge (6).

3. Pruning tool according to claim 1 or claim 2, characterised in that the concave bearing edge (6) has a first bearing edge portion (16) that is not curved or only slightly curved, substantially in line with the shaft (4), connected at an angle to a curved second bearing edge portion (17) to form an angular bearing edge far end (14) adapted to receive and to hold branches (18) of smaller diameter.

4. Pruning tool according to claim 3, characterised in that the interior space of the opening (12) of the hook portion (5) has a depth (P) substantially equal to its spread (O).

5. Pruning tool according to claim 4, characterised in that the second bearing edge portion (17) has a quarter-circle profile the centre (C) of which is substantially on the opposite edge of the shaft facing the end (40) of the hook portion (5).

6. Pruning tool according to claim 4 or claim 5, characterised in that the movable tool portion (7) is shaped so that:
- at the start of penetration of the cutting edge (11) into the opening (12) of the hook portion (5), the lever (9) is inclined at an angle A of less than 135° to the developing direction of the shaft (4), and the cutting edge (11) is flush with the interior portion of the hook in the intermediate area along the depth (P) of the hook,
- at the end of penetration of the cutting edge (11) into the opening (12) of the hook portion (5), the lever (9) is inclined at an angle B of less than 45° to the developing direction of the shaft (4).

7. Pruning tool according to any one of claims 1 to 6, characterised in that the movable tool portion (7) is spring-loaded towards an open position by a spring (19).

8. Pruning tool according to claim 7, characterised in that the spring (19) is a leaf spring wound in a spiral around a hub (20) fastened to the tool body (1) and passing through a hole (21) in the movable tool portion (7), the interior end (30) of the spring (19) being engaged in a slot (31) in the hub (20), the exterior end (32) of the spring (19) being hooked onto the movable tool portion (7).

## Patentansprüche

1. Astschere zum Abschneiden von Baumästen, umfassend:
- einen Werkzeugkörper (1) in Form eines Hakens (5), der so ausgebildet ist, daß er über einen Verbindungsabschnitt (2) am Ende (3) einer Griffstange (4) befestigt werden kann, welcher sich in der Längsrichtung (I - I) der Griffstange erstreckt, wobei der Innenrand des Hakens (5) eine konkave Auflagekante (6) bildet, deren Krümmungsmittelpunkt in Richtung auf die Griffstange (4) weist,
- ein bewegliches Werkzeug (7), das an dem Werkzeugkörper (1) über eine Drehachse (8) angelenkt, und fest mit einem Schwenkhebel (9) verbunden ist, der sich dem Haken (5) gegenüberliegend zu einer Seite hin erstreckt, wobei das Werkzeug (7) eine Schneidkante (11) in Form eines konvexen Bogens aufweist, die bei einer Drehung des beweglichen Werkzeugs (7) allmählich das Öffnungsmaul (12) des Hakens (5) gleitend überdeckt,
- Mittel (10) zur Betätigung des Schwenkhebels (9) zum Drehen des beweglichen Werkzeugs (7),
- wobei die Drehachse (8) des beweglichen Werkzeugs (7) auf dem in die Griffstange (4) übergehenden Verbindungsabschnitt (2) des Werkzeugkörpers (1) liegt,
dadurch gekennzeichnet, daß:
- das bewegliche Werkzeug (7) und der Schwenkhebel (9) eine Einheit von einer im wesentlichen gekrümmten Form bilden, die mit ihrem abgekröpften Ende an dem Werkzeugkörper (1) angelenkt, und gegenüber der Krümmung des Hakens (5) des Werkzeugkörpers (1) umgekehrt gekrümmt ist,
- der Schwenkhebel (9) so mit dem beweglichen Werkzeug (7) verbunden ist, daß er relativ zu der Drehachse (8) in Richtung auf die Griffstange (4) verlagert wird,
so daß der Schwenkhebel (9) während der Rotation des beweglichen Werkzeugs (7) in allen aufeinander folgenden Stellungen eine obere Auskehlung (15) frei läßt, die den Durchtritt von Seitenästen gestattet, welche in der Nähe des zu schneidenden Astes (13) liegen, so daß der Schwenkhebel (9) unterhalb der benachbarten Seitenäste schwenkbar ist und dabei das bewegliche Werkzeug (7) betätigt.

2. Astschere nach Anspruch 1, dadurch gekennzeichnet, daß die Drehachse (8) auf dem Verbindungsabschnitt (2) des in die Griffstange (4) übergehenden Werkzeugkörpers (1) im wesentlichen in Höhe des Grundes (14) der konkaven Auflagekante (6) des Werkzeugkörpers, oder leicht oberhalb des Grundes (14) der Auflagekante (6) liegt.

3. Astschere nach Anspruch 1 oder 2, dadurch gekennzeichnet, daß die konkave Auflagekante (6) einen ersten Kantenabschnitt (16) hat, der leicht oder nicht gekrümmt ist, im wesentlichen in der Verlängerung der Griffstange (4) liegt, und in einem Winkel in einem zweiten, gekrümmten Kantenabschnitt (17) übergeht, wodurch ein winkelförmiger Grund (14) der Auflagekante gebildet wird, welcher Äste (18) kleinerer Durchmesser aufnehmen und einklemmen kann.

4. Astschere nach Anspruch 3, dadurch gekennzeichnet, daß der Innenraum des Öffnungsmauls (12) des Hakens (5) eine Tiefe (P) hat, die im wesentlichen seiner lichten Weite (O) entspricht.

5. Astschere nach Anspruch 4, dadurch gekennzeichnet, daß der zweite Kantenabschnitt (17) die Form eines Viertelkreises hat, dessen Mittelpunkt (C) im wesentlichen auf dem Rand der Griffstange (4) liegt, welcher der Spitze (40) des Hakens (5) gegenüberliegt.

6. Astschere nach Anspruch 4 oder 5, dadurch gekennzeichnet, daß das bewegliche Werkzeug (7) wie folgt geformt ist:
- zu Beginn des Eindringens der Schneidkante (11) in das Öffnungsmaul (12) des Hakens (5) ist der Schwenkhebel (9) zur Längserstreckung der Griffstange (4) um einen Winkel (A) von weniger als 135° geneigt, wobei die Schneidkante (11) bündig zu einem inneren Abschnitt des Hakens verläuft, der in einem Zwischenbereich entlang der Tiefe (P) des Hakens liegt,
- am Ende des Eindringens der Schneidkante (11) in das Öffnungsmaul (12) des Hakens (5) ist der Schwenkhebel (9) bezüglich der Längserstreckung der Griffstange (4) um einen Winkel (B) von weniger als 45° geneigt.

7. Astschere nach einem der Ansprüche 1 bis 6, dadurch gekennzeichnet, daß eine Feder (19) das bewegliche Werkzeug (7) in Richtung auf seine Öffnungsstellung beaufschlagt.

8. Astschere nach Anspruch 7, dadurch gekennzeichnet, daß die Feder (19) eine Blattfeder ist, die spiralförmig um eine Nabe (20) gewickelt ist, welche fest mit dem Werkzeugkörper (1) verbunden ist und durch eine Öffnung (21) des beweglichen Werkzeugs (7) verläuft, wobei das innere Ende (30) der Feder (19) in einen Schlitz (31) der Nabe (20) eingreift, während das äußere Ende (32) der Feder (19) am beweglichen Werkzeug (7) angreift.
